# EUROPÄISCHE PATENTSCHRIFT

(11) **EP 0 299 305 B1**
(45) Veröffentlichungstag und Bekanntmachung des Hinweises auf die Patenterteilung: **08.09.1993**
(21) Anmeldenummer: 88110596.9
(22) Anmeldetag: 02.07.1988
(51) Int. Cl.: C08G 64/20

(54) **Verfahren zur Herstellung von aliphatischen Polycarbonaten**
Process for the preparation of aliphatic polycarbonates
Procédé pour la préparation de polycarbonates aliphatiques

(30) Priorität: 14.07.1987 DE 3723194
(43) Veröffentlichungstag der Anmeldung: 18.01.1989
(73) Patentinhaber: BAYER AG, 51368 Leverkusen (DE)
(72) Erfinder: Piejko, Karl-Erwin, Dr., D-5000 Köln 80 (DE); Bömer, Bruno, Dr., D-5060 Bergisch Gladbach 2 (DE); Buysch, Hans-Josef, Dr., D-4150 Krefeld (DE); Hüllmann, Michael, Dr., D-6148 Heppenheim (DE)

(56) Entgegenhaltungen:
- EP-A- 0 188 204
- DE-A- 3 523 399
- US-A- 4 414 372

## Beschreibung

Die Erfindung betrifft ein neues Verfahren zur Herstellung von aliphatischen Polycarbonaten durch Polymerisation von cyclischen Carbonaten.

Verfahren zur Herstellung von aliphatischen Polycarbonaten durch Polymerisation von cyclischen Carbonaten sind bekannt (siehe J. Am. Chem. Soc. 52, S. 314ff (1930); die deutschen Offenlegungsschriften 15 45 116, 15 45 117, 15 45 118, 31 03 135 und 32 04 078; die EP-A-188 204; Makromol. Chem. 187, S. 2579ff (1986)). Die in den vorstehend genannten Druckschriften genannten Verfahren unterscheiden sich im wesentlichen durch die in ihnen verwendeten alkalisch reagierenden Katalysatoren und/oder Initiatoren, die für die ringöffnende Polymerisation der cyclischen Carbonate angewendet werden.

Gemäß dem in J. Am. Chem. Soc. 52, S. 314ff (1930) beschriebenen Verfahren wird die Polymerisation mit Kaliumcarbonat als alkalisch reagierendem Katalysator ausgelöst; die Polymerisation wird in Abwesenheit von Lösungsmitteln bei 130° C durchgeführt. In den in den deutschen Offenlegungsschriften 15 45 116, 15 45 117 und 15 45 118 beschriebenen Verfahren werden metallorganische Verbindungen, wie Metallalkoholate und -amide, als Polymerisationskatalysatoren verwendet; die Polymerisation wird in Abwesenheit von Lösungsmitteln bei 90° C vorgenommen. Gemäß den in den deutschen Offenlegungsschriften 31 03 135 und 32 04 078 beschriebenen Verfahren werden alkalisch reagierende Thalliumverbindungen als Polymerisationskatalysatoren eingesetzt. In der EP-A-188 204 ist ein Verfahren zur Herstellung von vernetzten Duromeren aus cyclischen Carbonaten beschrieben; in diesem Verfahren werden Katalysatoren eingesetzt, die aus zwei Komponenten, nämlich a) Amiden, Aminen, Harnstoffen, Lactonen oder (Thio-)Alkoholen und b) Alkalimetallalkoholaten, -carbonaten, Erdalkalimetalloxiden, alkali- oder aluminiumorganischen Verbindungen aufgebaut sind. Die Polymerisation wird in Abwesenheit von Lösungsmitteln bei erhöhter Temperatur vorgenommen. In Makromol. Chem. 187, S. 2579ff (1986) ist die Polymerisation cyclischer Carbonate in Gegenwart von Lösungsmitteln beschrieben; die Reaktion wird bei tiefen Temperaturen (unterhalb der Ceiling-Temperatur von +30° C) vorgenommen und als Initiator wird sec.-Butyllithium verwendet. (Ceiling-Temperatur = Temperatur, oberhalb derer keine Polymerisation zu hochmolekularen Polymeren mehr stattfindet.

Alle vorstehend genannten Verfahren haben wegen der in ihnen verwendeten alkalisch reagierenden Katalysatoren und/oder Initiatoren den Nachteil, daß mit ihnen keine aliphatischen Polycarbonate erhältlich sind, die Alkali-empfindliche, radikalisch polymerisierbare Gruppen, wie die (Meth-)Acryloyl-Gruppe, aufweisen. Polycarbonate mit solchen Alkali-empfindlichen, radikalisch polymerisierbaren Gruppen sind jedoch als Prepolymere von erheblichem technischen Interesse. Man kann diese Prepolymere z.B. nach der Formgebung, durch radikalische Polymerisation in Duromere überführen oder mit anderen Monomeren zu Copolymerisaten mit kammartiger Struktur umsetzen. Auf diese Weise werden aus den aliphatischen Polycarbonaten mit den Alkali-empfindlichen, radikalisch polymerisierbaren Gruppen aliphatische Polycarbonate mit völlig neuen Eigenschaftsbildern zugänglich.

Die in der DE-OS 35 23 399 als Katalysatoren für die ringöffnende Polymerisation cyclischer Carbonate beschriebenen Ammoniumphosphonate sind wegen ihrer geringen Reaktivität nur für Polymerisationen oberhalb von 130° C verwendbar; außerdem sind sie für die Einführung funktioneller Gruppen in das Polymer ungeeignet.

Die Erfindung betrifft ein Verfahren zur Herstellung von aliphatischen Polycarbonaten durch Polymerisation von cyclischen aliphatischen Carbonaten in Gegenwart von Initiatoren und/oder Katalysatoren, das dadurch gekennzeichnet ist, daß man als Initiatoren Alkoxysilane der Formel 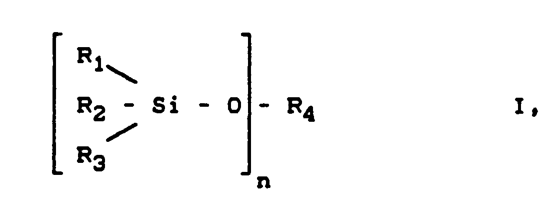
in der
- R₁, R₂ und R₃: unabhängig voneinander für einen C₁-C₄-Alkylrest stehen,
- n: eine ganze Zahl von 1 bis 6 ist, und
- R₄: einen n-wertigen, gegebenenfalls substituierten aliphatischen Kohlenwasserstoffrest bedeutet
und als Katalysatoren, die aus der Gruppentransfer-Polymerisation bekannten nucleophilen Katalysatoren verwendet.

Es wurde eine Initiator/Katalysator-Kombination für die ringöffnende Polymerisation Von cyclischen aliphatischen Carbonaten gefunden, die die Nachteile der bekannten Katalysatoren nicht mehr aufweist. Es wurde gefunden, daß sich mit bestimmten Alkoxysilanen (Trisalkylsilylethern) in Kombination mit den aus der Gruppentransfer-Polymerisation bekannten nucleophilen Katalysatoren die Polymerisation von cyclischen aliphatischen Carbonaten zu aliphatischen Polycarbonaten wirkungsvoll auslösen läßt. Die mit dieser Kombination aus bestimmten Alkoxysilanen und nucleophilen Katalysatoren ausgelösten Polymerisationsreaktionen verlaufen sowohl bei hohen wie auch bei tiefen Temperaturen, sowohl in Gegenwart als such in Abwesenheit von Lösungsmitteln schnell und vollständig und führen zugleich zu Polymerisaten mit einheitlicher Kettenlänge, d.h. gleichmäßiger Verteilung des Zahlenmittelwerts der Molmasse. Ferner lassen sich mit dieser speziellen Initiator/Katalysator-Kombination Alkali-empfindliche funktionelle Gruppen in das Polymerisat einführen.

Die die Polymerisation auslösende Wirkung der erfindungsgemäßen Kombination, die eine bevorzugte Ausführungsform Sind, von Alkoxysilanen der Formel I und der nucleophilen Katalysatoren war in keiner Weise vorhersehbar. Im Gegenteil aus den US-Patentschriften 4 414 372 und 4 417 034 war bekannt, daß sich die bei der Polymerisation von Acrylsäurederivaten gegebenenfalls als Initiatoren verwendbaren Trisalkylsilylether von Enolen ableiten, z.B. O-Silylketenacetale sein müssen und daß Trisalkylsilylether ohne Enolatstruktur unter den Polymerisationsbedingungen stabil, d.h. als Initiator unwirksam sind. Überraschenderweise wurde gefunden, daß bei der Polymerisation der cyclischen aliphatischen Carbonate Trisalkylsilylether ohne Enolatstruktur, nämlich die Trisalkylether der Formel I, hochwirksame Initiatoren sind, obwohl die Polymerisation der Carbonate unter Bedingungen vorgenommen wird, die mit denen vergleichbar sind, die für die Polymerisation der Acrylsäure-Derivate angewandt werden.

Die erfindungsgemäße Initiator/Katalysator-Kombination, die eine bevorzugte Ausführungsform ist, hat den Vorteil, daß die in ihr zu verwendenden Initiatoren leicht zugänglich, stabil, destillierbar und ungefährlich, d.h. ohne besondere Vorsichtsmaßnahmen handhabbar sind. Die erfindungsgemäße Kombination hat ferner den Vorteil, daß die Polymerisation auch in Lösung vorgenommen werden kann und deshalb eine Polymerisation unterhalb der Ceiling-Temperatur der entstehenden Polycarbonate ermöglicht. Auf diese Weise werden lineare aliphatische Polycarbonate erhältlich, deren Molmassen vom Monomer/Initiator-Verhältnis bestimmt werden und die definierte Endgruppen aufweisen.

Für R₁, R₂ und R₃ kommen als C₁-C₄-Alkylreste vor allem der Methyl, Ethyl, n- und i-Propyl und der n-, i-, sec.-Butylrest in Betracht.

R₄ steht für den n-wertigen Rest eines aliphatischen Kohlenwasserstoffs; die erfindungsgemäß als Initiatoren zu verwendenden Alkoxysilane der Formel (I) können sich sowohl von ein- als auch von mehrwertigen Alkoholen ableiten. R₄ steht deshalb für die n-wertigen, aliphatischen Alkoholen zugrundeliegenden Kohlenwasserstoffreste.

Als Substituenten für die n-wertigen Kohlenwasserstoffreste, für die R₄ steht, kommen vor allem Alkoxy-und/oder Acyloxy- oder Acylaminogruppen in Betracht; bevorzugte Substituenten sind C₁-C₂₀-Alkoxy-, C₁-C₂₀-Alkenoxy-, (Meth)acryloyloxy- oder (Meth)acryloylamino-Gruppen.

Für R₄ seien als n-wertige aliphatische Kohlenwasserstoffreste beispielsweise genannt:
Als einwertige Reste: gesättigte oder ungesättigte aliphatische C₁-C₂₀-Kohlenwasserstoffreste wie der Methyl-, Ethyl-, i-Propyl-, n-Butyl-, sec.-Butyl-, 2-Ethylhexyl-, n-Dodecyl-, Palmityl-, Stearyl-, Allyl- und Oleylrest; ferner Polyoxaalkylenreste der Formel R˝O-(CH₂-CH(R′)-O)ₚ-CH₂-CH(R′)-, in der R′ für H oder CH₃, R˝ für einen C₁-C₄-Alkylrest und p für 0-100 stehen;
als zweiwertige Reste: C₂-C₂₀-Alkylenreste wie der Ethylen-, Propylen-1,2-, Propylen-1,3-, Butylen-1,4-, Butylen-1,2-, Hexamethylen- und Hexylen-1,2-Rest;
als dreiwertige Reste vor allem die aliphatischen Triolen, wie Glycerin, Trimethylolethan, Trimethylolpropan oder Hexantriol, zugrunde liegenden Kohlenwasserstoff-Reste;
als vierwertige Reste vor allem die 4-wertigen aliphatischen Alkoholen, wie Pentaerythrit, zugrunde liegenden Kohlenwasserstoffreste;
als fünfwertige Reste vor allem die 5-wertigen aliphatischen Alkoholen, wie Xylit, zugrunde liegenden Kohlenwasserstoffreste; und
als sechswertige Reste die 6-wertigen aliphatischen Alkoholen, wie Sorbit, zugrunde liegenden Kohlenwasserstoffreste.

Als Beispiele für die substituierten Reste R₄ seien der 2-(Meth)acryloyloxy-ethyl-, der 3-(Meth)acryloyloxypropyl-, der 2-(Meth)acryloylamino- ethyl-Rest ferner der 2-Methoxyethyl-, 2-Hexyloxyethyl-, 3-Ethoxypropyl-, 3-Allyloxy-ethyl-, 3-Methoxypropylen-1,2- und der 2,2-Bis-ethoxy-propylen-1,3-Rest.

Die erfindungsgemäß zu verwendenden Initiatoren der Formel I werden im allgemeinen in einer Menge von 0,001 -20 Gew.-%, bevorzugt 0,01 - 15 Gew.-%, besonders bevorzugt 0,05 - 10 Gew.-%, bezogen auf das Gewicht der Monomere eingesetzt.

Als nucleophile, aus der Gruppentransfer-Polymerisation bekannte Katalysatoren seien vorzugsweise die folgenden Fluoride und Bifluoride genannt: Tris-(dimethylamino)-sulfoniumdifluorotrimethylsilicat (TASF), Tetrabutylammoniumfluorid (TBAF), Tris-(dimethylamino)-sulfoniumbifluorid (TASHF₂), Tetraalkylammoniumbifluoride, Kaliumbifluorid und Benzyltrimethylammoniumfluorid und -bifluorid.

Die Herstellung des bevorzugt verwendeten Katalysators TASF ist in der US-Patentschrift 3 940 402, die des entsprechenden Bifluorids (TASHF₂) in "Polymer Preprints ACS Washington, 24, 52 (1983)" beschrieben.

Initiator und Katalysator werden in Molverhältnissen angewendet, die zwischen 500 -0,1:1, vorzugsweise 100 -1:1, besonders bevorzugt bei 10 -1:1 liegen.

Die im erfindungsgemäßen Polymerisationsverfahren einsetzbaren cyclischen aliphatischen Carbonate können monocyclisch, di- und polycyclisch sein.

Als monocyclische Carbonate seien genannt:
Carbonate der allgemeinen Formel 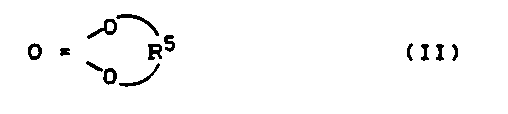
in der
- R⁵: (CH₂)ₙ mit n = 3 bis 6, -CH₂CH=CHCH₂-, -CH₂CH₂CH(CH₃)-, -CH₂CH₂OCH₂CH₂OCH₂CH₂-, 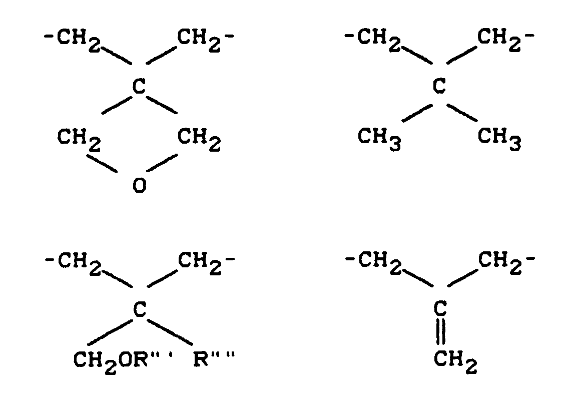
- R‴: = H, C₁-C₄-Alkyl, Allyl
- R˝˝: = C₁-C₄-Alkyl
bedeutet,
Carbonate der allgemeinen Formel 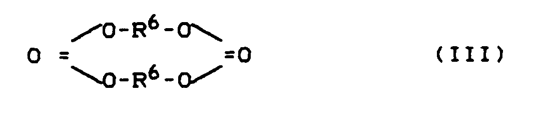
in der
- R⁶: (CH₂)ₙ mit n = 4 bis 12, -CH₂CH₂OCH₂CH₂-, -CH₂CH₂-O-CH₂CH₂-O-CH₂CH₂-, 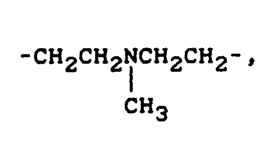 bedeutet,
und das Carbonat der allgemeinen Formel 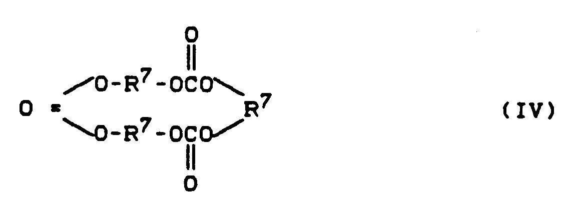
in der
- R⁷: -CH₂CH₂OCH₂CH₂- bedeutet.

Bevorzugt sind die monocyclischen Carbonate der Formel (II).

Als bifunktionelle, vernetzend wirkende di- und polycyclische Carbonate seien beispielsweise genannt:
Carbonate der Formeln 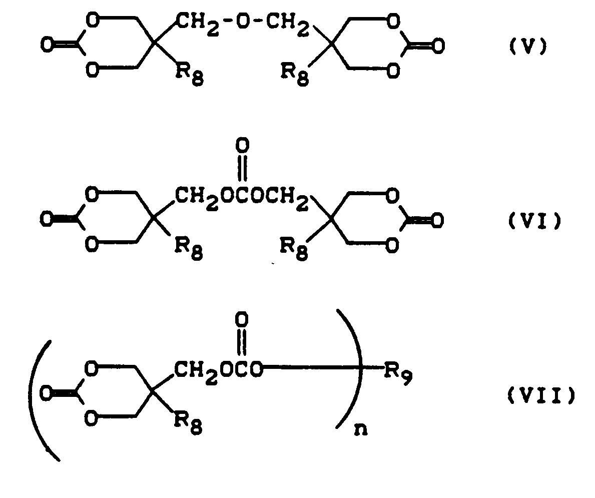
in denen
- R₈: ein C₁-C₄-Alkylrest ist,
- R₉: für einen Alkylidenrest mit 3 bis 18 C-Atomen, für einen Arylrest mit 6 bis 12 C-Atomen oder für einen Aralkylrest mit 7 bis 24 C-Atomen steht und
- n: 2, 3 oder 4 bedeutet.

Bevorzugt werden bifunktionelle Carbonate der Formel (VI) verwendet.

Das erfindungsgemäße Polymerisationsverfahren wird bevorzugt in einer Inertgasatmosphäre, z.B. unter Argon oder -vorzugsweise - unter Stickstoff unter Ausschluß von Luftfeuchtigkeit durchgeführt.

Das erfindungsgemäße Verfahren kann sowohl in Abwesenheit von Lösungsmitteln als auch in Gegenwert von Lösungsmitteln durchgeführt werden. Als Lösungsmittel werden vorzugsweise polare, aprotische Lösungsmittel wie Ether, z.B. Tetrahydrofuran oder Dimethoxyethan, oder Nitrile, wie Acetonitril eingesetzt.

Bei Verwendung von Lösungsmitteln richtet sich deren Menge nach der Löslichkeit der cyclischen Carbonate bei der betreffenden Reaktionstemperatur. Im allgemeinen liegen die Mengen an Monomer in der Lösung zwischen 0,5 Gew.-% und der Sättigungskonzentration in dem betreffenden Lösungsmittel, bevorzugt zwischen 1 Gew.-% und der Sättigungskonzentration.

Die erfindungsgemäße Polymerisation wird in Abwesenheit von Lösungsmitteln bei Temperaturen von 70 bis 170° C, bevorzugt 80 bis 160° C ausgeführt. Diese lösungsmittelfreie Arbeitsweise eignet sich sowohl zur Herstellung von Homopolymerisaten bestimmter cyclischer aliphatischer Carbonate wie auch zur Herstellung von Copolymerisaten aus Gemischen verschiedener monofunktioneller cyclischer Carbonate und zur Herstellung von Copolymerisaten aus einem oder mehreren monofunktionellen und einem oder mehreren polyfunktionellen, vernetzend wirkenden cyclischen Carbonaten. Die Menge an letztgenannten beträgt in den vernetzten Copolymerisaten vorzugsweise 5 bis 20 Gew.-%, bezogen auf das Gesamtgewicht der Monomere.

Die Polymerisation in Lösungsmitteln wird bei Temperaturen von -100 bis +20° C, bevorzugt von -50° bis +10° C durchgeführt. Diese Arbeitsweise eignet sich vor allem zur Herstellung von Homo- oder Copolymerisaten aus monofunktionellen cyclischen aliphatischen Carbonaten.

Das erfindungsgemäße Polymerisationsverfahren wird bevorzugt in folgender Weise durchgeführt:
Das Monomer bzw. Monomerengemisch wird, gegebenenfalls in einem organischen Lösungsmittel gelöst, auf eine bestimmte Temperatur thermostatisiert und anschließend mit der Lösung des Initiators, die im Falle der bevorzugten Ausführungsform auch den Katalysator enthält, bei der bestimmten Temperatur versetzt. Nach Beendigung der Polymerisationsreaktion wird das Polymerisationsgemisch durch Zugabe eines Desaktivators desaktiviert, um eine Rückreaktion zu cyclischen Oligomeren zu vermeiden. Die bei der Polymerisationsreaktion erhaltenen aliphatischen Polycarbonate werden anschließend entweder durch Ausfällen, z.B. durch Zugabe von Alkoholen, oder durch schonendes Abdestillieren der leichtflüchtigen Verbindungen isoliert.

Als Desaktivatoren können Protonensäuren wie Wasser, Chlorwasserstoff oder Alkylhalogenide, wie Methylchlorid oder Carbonsäurechloride, -anhydride oder -ester verwendet werden. Bevorzugte Desaktivatoren sind methanolische Salzsäure, Methyliodid, Benzylchlorid oder Chlorameisensäureester.

### Beispiel 1

In einem durch Erwärmen im Vakuum getrockneten, mit Magnetrührer ausgerüsteten 100 ml-Kölbchen werden unter Stickstoff 3 g 5,5-Dimethyl-1,3-dioxan-2-on (Neopentylglykolcarbonat) in 30 ml Tetrahydrofuran gelöst. Die Lösung wird auf -10° C thermostatisiert und dann mit 0,2 ml (0,2 mMol) einer 1-molaren Lösung von Tris-(dimethylamino)-sulfoniumbifluorid (TASHF₂) in Acetonitril versetzt. Die Polymerisation wird durch Zugabe von 0,15 g (1 mMol) i-Butyl-trimethylsilylether gestartet. Die Polymerisationsmischung wird 1 Stunde bei -10° C gerührt und anschließend mit 1 ml eines Methanol/Salzsäure-Gemisches (8/2) versetzt. Die Polymerisationsmischung wird am Rotationsverdampfer von den flüchtigen Bestandteilen befreit.

Es werden 3 g Polymer erhalten. Zahlenmittelwert der Molmasse (Mₙ): 2,9 kg/Mol (Mₙ wurde gelchromatographisch bestimmt).

### Beispiel 2

In einer wie in Beispiel 1 beschrieben ausgerüsteten und vorbehandelten Apparatur werden 110,7 g Neopentylglykolcarbonat in 944 g Tetrahydrofuran gelöst. Die Lösung wird auf -10° C thermostatisiert und mit 5 ml 1-molarer TASHF₂-Lösung (5 mMol TASHF₂) versetzt. Die Polymerisation wird durch Zugabe von 11,2 g (59,7 mMol) 2-Acryloyloxyethyl-trimethylsilylether gestartet und nach 30 Minuten durch Zugabe von 25 ml methanolischer Salzsäure beendet. Nach dem Abdampfen der flüchtigen Bestandteile werden 110 g Polymer erhalten. Das ¹H-NMR-Spektrum des Polymers (in CDCl₃) zeigt neben den beiden Singuletts für die Methyl- bzw. Methylenprotonen der Polymerkette zwischen 5,8 und 6,5 ppm die Signale der 3 Protonen der Vinylgruppe und bei 4,4 ppm ein Signal für die 4 Protonen der -OCH₂CH₂O-Gruppe des Initiatorrestes. Aus dem Verhältnis der Intensitäten der Signale der Protonen der Polymerkette und des Initiatorrestes ergibt sich für das Polymer ein Mₙ-Wert von 1,8 kg/Mol.

### Beispiel 3

Es wird wie in Beispiel 1 beschrieben verfahren, nur wird die Polymerisation mit 0,3 g (2 mMol) i-Butyltrimethylsilylether gestartet. Nach dem Aufarbeiten des Polymerisationsgemisches erhält man 3,2 g Polymer (gelchromatographisch bestimmter Mₙ-Wert: 1,2 kg/Mol).

### Beispiel 4

Es wird wie in Beispiel 3 beschrieben verfahren. Als Monomer werden 3 g 5-Methyliden-1,3-dioxan-2-on eingesetzt. Es werden 3,3 g eines zuerst öligen, später erstarrenden Polymers erhalten.

### Beispiel 5

Es wird wie in Beispiel 3 beschrieben verfahren. Als Monomer werden jedoch 3 g 5-Ethyl-5-(propen-2-yloxy-methyl)-1,3-dioxan-2-on verwendet. Es werden 3,5 g Polymerisat in Form einer viskosen Flüssigkeit erhalten. Das Polymerisat läßt sich radikalisch mit Azo-bis(isobutyronitril) (1 Gew.-%, 60° C) zu einem unlöslichen Polymerisat vernetzen.

### Beispiel 6

Es wird wie in Beispiel 1 beschrieben verfahren; als Katalysator werden jedoch 0,2 ml (0,2 mMol) einer 1-molaren Lösung von Tris-(dimethylamino)-sulfoniumdifluorotrimethylsilikat (TASF) in Acetonitril verwendet. Die Polymerisation wird mit 0,3 g (2 mMol) i-butyl-trimethylsilylether gestartet. Nach der Aufarbeitung werden 3,2 g Polymer erhalten.

### Beispiel 7

Eine Mischung aus 4,5 g Neopentylglykolcarbonat und 0,5 g Bis-(5-ethyl-1,3-dioxan-2-on-5-yl)-methyl-carbonat wird bei 120° C geschmolzen und mit 0,02 ml (0,02 mMol) einer 1-molaren Lösung von TASHF₂ in Acetonitril und 0,02 g (0,13 mMol) i-Butyl-trimethylsilylether versetzt. Das Polymerisationsgemisch erstarrt nach 3 Minuten zu einem klaren, festen Polymerisat.

### Beispiel 8

Es wird wie in Beispiel 7 beschrieben verfahren unter Verwendung eines Monomerengemisches aus 4,5 g 5-Ethyl-5-(propen-2-yloxy-methyl)-1,3-dioxan-2-on und 0,5 g Bis-(5-ethyl-1,3-dioxan-2-on-5-yl)-methyl-carbonat. Das Polymerisationsgemisch erstarrt nach 5 Minuten zu einem klaren, festen Polymerisat.

### Beispiel 9

Es wird wie in Beispiel 7 beschrieben verfahren; eingesetzt wird ein Monomerengemisch aus 2,25 g Neopentylglykolcarbonat, 2,25 g 5-Ethyl-5-(propen-2-yloxy-methyl)- 1,3-dioxan-2-on und 0,5 g Bis-(5-ethyl-1,3-dioxan-2-on-5-yl)-methyl-carbonat. Die Polymerisation wird bei 94 bis 98° C vorgenommen. Nach einer Polymerisationszeit von 32 Minuten wird ein klares, festes Polymerisat erhalten.

### Beispiel 10

10 g Neopentylglykolcarbonat werden bei einer Badtemperatur von 110° C geschmolzen. Unter Rühren wird die Schmelze mit 0,47 g (2,5 mmol) 2-Acryloyloxyethyl-trimethylsilylether und 0,1 ml einer 1 molaren TASHF₂-Lösung (0,1 mmol) versetzt. Das Polymerisationsgemisch wird 10 Minuten gerührt. Nach dem Verdünnen mit 30 ml trockenem Toluol wird die Polymerisation durch Zugabe von 1 ml mit trockenem HCl-Gas gesättigtem Toluol abgestoppt. Nach dem Abdestillieren der flüchtigen Bestandteile erhält man 8,4 g Polymer (gelchromatographisch bestimmter Mₙ-Wert: 3,4 kg/Mol). Das ¹H-NMR-Spektrum des Polymers entspricht dem in Beispiel 2 erhaltenen Polymer. Aus dem Verhältnis der entsprechenden Signale errechnet sich ein mittlerer Polymerisationsgrad von 25.

## Patentansprüche

1. Verfahren zur Herstellung von aliphatischen Polycarbonaten durch Polymerisation von cyclischen aliphatischen Carbonaten in Gegenwart von Initiatoren dadurch gekennzeichnet, daß man als Initiatoren Alkoxysilane der Formel 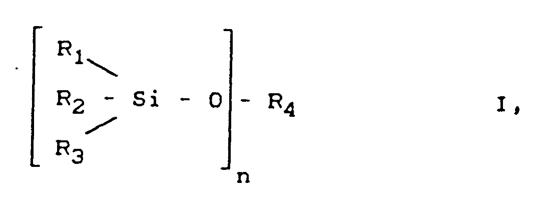 in der
R₁, R₂ und R₃ unabhängig voneinander für einen C₁-C₄-Alkylrest stehen,
n eine ganze Zahl von 1 bis 6 ist, und
R₄ einen n-wertigen, gegebenenfalls substituierten aliphatischen Kohlenwasserstoffrest bedeutet, worin am α-C-Atom keine ethylenische Doppelbindung steht,
in einer Menge von 0.001 bis 20 Gew.-%, bezogen auf das Gesamtgewicht der Monomeren, verwendet.

2. Verfahren nach Anspruch 1, dadurch gekennzeichnet, daß man als Initiatoren Alkoxysilane der Formel (I) einsetzt, in der
R₄ für einen n-wertigen, gegebenenfalls substituierten aliphatischen Kohlenwasserstoffrest steht, der sich von einem 1- oder mehrwertigen Alkohol ableitet.

3. Verfahren nach Anspruch 1, dadurch gekennzeichnet, daß man als Initiatoren Alkoxysilane der Formel (I) einsetzt, in der R₄ für einen n-wertigen, durch Alkoxy-, Alkenoxy-, (Meth)Acryloyloxy- und/oder (Meth)Acryloylaminogruppen substituierten Kohlenwasserstoffrest steht.

4. Verfahren nach Anspruch 1, dadurch gekennzeichnet, daß man als Initiatoren Alkoxysilane der Formel (I) einsetzt, in der R₄ für einen 2-(Meth)acryloyloxy-ethyl-, 3-(Meth)acryloyloxy-propyl-, 2-(Meth)acryloylaminoethyl-, 2-Methoxyethyl-, 2-Hexyloxy-ethyl-, 3-Ethoxypropyl-, 3-Allyloxy-ethyl-, 3-Methoxypropylen-1,2- oder 2,2-Bis-ethoxy-propylen-1,3-Rest steht.

5. Verfahren nach Ansprüchen 1 - 4, wonach man zusätzlich aus der Gruppentransferpolymerisation bekannte nucleophile Katalysatoren in einer solchen Menge verwendet, daß das Molverhältnis Initiator/Katalysator zwischen 500 und 0.1:1 liegt.

6. Verfahren nach Anspruch 5, wonach Katalysatoren Tris-(dimethylamino)-sulfoniumdifluorotrimethylsilicat (TASF), Tetrabutylammoniumfluorid (TBAF), Tris-(dimethylamino)-sulfoniumbifluorid (TASHF₂), Benzyltrimethylammoniumfluorid und/oder Benzyltrimethylammoniumbifluorid verwendet.

7. Verfahren nach einem der Ansprüche 1 bis 6, dadurch gekennzeichnet, daß in ihm cyclische, aliphatische, nicht vernetzende Carbonate eingesetzt werden.

8. Verfahren nach Anspruch 7, dadurch gekennzeichnet, daß in ihm cyclische Carbonate mit 6 Ringgliedern eingesetzt werden.

9. Verfahren gemäß Anspruch 1, dadurch gekennzeichnet, daß man die Polymerisation in Abwesenheit von Lösungsmitteln bei Temperaturen von 70 bis 170°C oder in Gegenwart von Lösungsmitteln bei Temperaturen von -100 bis +20°C vornimmt.

## Claims

1. Process for the preparation of aliphatic polycarbonates by polymerising cyclic aliphatic carbonates in the presence of initiators, characterised in that the initiators used are alkorysilanes of the formula 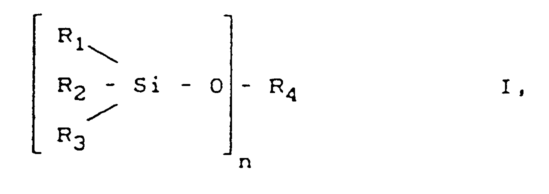 in which
R₁, R₂ and R₃ independently of one another represent a C₁-C₄-alkyl radical,
n is an integer from 1 to 6 and
R₄ denotes an n-valent, optionally substituted, aliphatic hydrocarbon radical with no ethylenic double bond on the α-catom,
in an amount of 0.001 to 20 % by weight, based on the total weight of monomer.

2. Process according to Claim 1, characterised in that the initiators employed are alkorysilanes of the formula (I) in which
R₄ represents an n-valent, optionally substituted, aliphatic hydrocarbon radical derived from a monohydric or polyhydric alcohol.

3. Process according to Claim 1, characterised in that the initiators employed are alkorysilanes of the formula (I) in which R₄ represents an n-valent hydrocarbon radical which is substituted by alkoxy, alkenoxy (meth)acryloylory and/or (meth)acryloylamino groups.

4. Process according to Claim 1, characterised in that the initiators employed are alkoxysilanes of the formula (I) in which R₄ represents a 2-(meth)acryloyloryethyl, 3-(meth)acryloyloxypropyl, 2-(meth)acryloylaminoethyl, 2-methoxyethyl, 2-hexyloxyethyl, 3-ethoxypropyl, 3-alloyloxyethyl, 3-methory-1,2-propylene or 2,2-bisethoxy-1,3-propylene radical.

5. Process according to Claims 1-4, wherein nucleophilic catalysts known from group transfer polymerisation are additionally used in an amount such that the molar ratio of initiator to catalyst is between 500:1 and 0.1:1.

6. Process according to Claim 5, wherein the catalysts used are tris-(dimethylamino)-sulphonium difluorotrimethylsilicate (TASF), tetrabutylammonium fluoride (TBAF), tris-(dimethylamino)-sulphonium hydrogen fluoride (TASHF₂), benzyltrimethylammonium fluoride and/or benzyltrimethylammonium hydrogen fluoride.

7. Process according to one of Claims 1 to 6, characterised in that cyclic, aliphatic, non-crosslinking carbonates are employed in the process.

8. Process according to Claim 7, characterised in that cyclic carbonates having 6 ring members are employed in the process.

9. Process according to Claim 1, characterised in that the polymerisation is carried out in the absence of solvents at temperatures from 70 to 170°C, or in the presence of solvents at temperatures from -100 to +20°C.

## Revendications

1. Procédé de préparation de polycarbonates aliphatiques par polymérisation de carbonates aliphatiques cycliques en présence d'inducteurs, caractérisé en ce que l'on utilise en tant qu'inducteurs des alcoxysilanes de formule 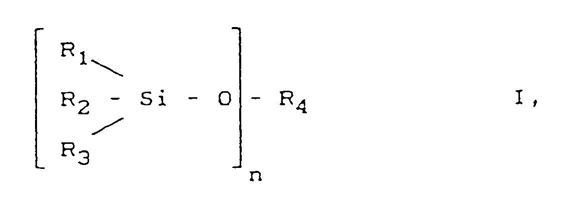 dans laquelle
R₁, R₂ et R₃ représentent chacun, indépendamment les uns des autres, un groupe alkyle en C₁-C₄,
n est un nombre entier allant de 1 à 6, et
R₄ représente un radical hydrocarboné aliphatique éventuellement substitué de valence n, dans lequel il n'y a pas de double liaison éthylénique sur l'atome de carbone alpha, en quantité de 0,001 à 20 % en poids par rapport au poids total des monomères.

2. Procédé selon la revendication 1, caractérisé en ce que l'on utilise en tant qu'inducteurs des alcoxysilanes de formule I dans laquelle R₄ représente un radical hydrocarboné aliphatique éventuellement substitué de valence n dérivant d'un alcool mono- ou polyvalcnt.

3. Procédé selon la revendication 1, caractérisé en ce que l'on utilise en tant qu'inducteurs des alcoxysilanes de formule I dans laquelle R₄ représente un radical hydrocarboné de valence n substitué par des groupes alcoxy, alcénoxy, (méth)acryloyloxy et/ou (méth)acryloylamino.

4. Procédé selon la revendication 1, caractérisé en ce que l'on utilise en tant qu'inducteurs des alcoxysilanes de formule I dans laquelle R₄ représente un groupe 2-(méth)acryloyloxyéthyle, 3-(méth)-acryloyloxypropyle, 2-(méth)-acryloylaminoéthyle, 2-méthoxyéthyle, 2-hexyloxyéthyle, 3-éthoxypropyle, 3-allyloxyéthyle, 3-méthoxypropylène-1,2 ou 2,2-bis-éthoxypropylène-1,3.

5. Procédé selon les revendications 1 à 4, dans lequel on utilise en outre des catalyseurs nucléophiles connus pour la polymérisation à transfert de groupes en quantité correspondant à un rapport molaire inducteur/catalyseur de 500 à 0,1:1.

6. Procédé selon la revendication 5, dans lequel on utilise en tant que catalyseur le difluorotriméthylsilicate de tris-(diméthylamino)-sulfonium (TASF), le fluorure de tétrabutylammonium (TBAF), le bifluorure de tris-(diméthylamino)-sulfonium (TASHF₂), le fluorure de benzyltriméthylammonium et/ou le bifluorure de benzyltriméthylammonium.

7. Procédé selon l'une des revendications 1 à 6, caractérisé en ce que l'on met en oeuvre des carbonates aliphatiques cycliques non réticulants.

8. Procédé selon la revendication 7, caractérisé en ce que l'on met en oeuvre des carbonates cycliques à 6 chaînons.

9. Procédé selon la revendication 1, caractérisé en ce que l'on polymérise en l'absence de solvant à des températures de 70 à 170°C ou en présence de solvants à des températures de -100 à +20°C.
